# EUROPEAN PATENT APPLICATION

(11) **EP 4 848 552 A1**
(43) Date of publication of application: **02.12.2026**
(21) Application number: 26181757.1
(22) Date of filing: 28.05.2026
(51) Int. Cl.: H02M 1/00

(54) **PHYSICS-INFORMED NEURAL NETWORKS FOR FEEDBACK ANALYSIS**

(30) Priority: 29.05.2025 US 202519222777
(71) Applicant: Analog Devices, Inc., Wilmington, MA 01887 (US)
(72) Inventor: LU, Wenjie, Wilmington, 01887 (US); YU, Tao, Wilmington, 01887 (US); JIAN, Tong, Wilmington, 01887 (US)
(74) Representative: Yang, Shu

(57) **Abstract**

Physics-informed neural networks and methods for modeling and analyzing feedback loop responses in electronic devices, including switching-mode power converters. The physics-informed neural network integrates physical principles with machine learning techniques to predict high-order transfer function parameters, such as poles, zeros, and gain, based on transient signals. These parameters are used to generate predicted frequency responses, including observable data like gain and phase, and non-observable data like poles and zeros. The predicted frequency responses are further translated into graphical representations, such as Bode plots and pole-zero plots, providing insights into system stability and performance. By extracting features that represent dynamic behavior and stability factors, the physics-informed neural network ensures predictions are physically meaningful and interpretable. The technology can be useful for real-time analysis, stability assessment, and automated compensation tuning in areas such as power management devices, industrial automation controllers, precision signal processing systems, and robotics platforms.

## Description

### CLAIM OF PRIORITY

This patent application claims the benefit of priority to U.S. Non-Provisional Application Serial No. 19/222,777, filed: May 29, 2025, which is incorporated by reference herein in its entirety.

### TECHNICAL FIELD

This document pertains generally, but not by way of limitation, to power electronics that can be implemented in switching-mode power converters, and more particularly in some examples, to the modeling and identification of feedback loop responses using physics-informed neural networks.

### BACKGROUND

Switching-mode power converters are widely used to convert electrical power from one voltage or current level to another. These converters operate by rapidly switching semiconductor devices to minimize energy loss and achieve high efficiency. They are employed across various industries, including consumer electronics, renewable energy systems, and industrial automation. The dynamic behavior of these converters, particularly their transient and frequency responses, is influenced by factors such as load variations, input voltage fluctuations, and system non-linearities.

Understanding the "feedback loop response" of switching-mode power converters is integral to managing their dynamic behavior. The feedback loop is a control mechanism within the system that continuously monitors the output voltage or current and adjusts the input to maintain desired operating conditions. The "feedback loop response" refers to the ability of this feedback loop to react to changes in the output voltage or current. It encompasses how quickly and accurately the feedback loop stabilizes the system in response to disturbances or variations in operating conditions. A well-designed feedback loop enables stable regulation, rejects disturbances, and ensures reliable performance. Accurate modeling and analysis of these responses are integral for achieving stable operation and optimizing the efficiency and reliability of switching-mode power converters across diverse applications.

### SUMMARY

Examples of the physics-informed neural networks and methods introduce a physics-informed neural network designed to model and analyze how feedback loops in feedback systems such as electronic devices (including switching-mode power converters) respond to changes in their operating conditions. Feedback loops are control mechanisms that help devices maintain stable and reliable performance by continuously adjusting their outputs based on changes in inputs or disturbances. The physics-informed neural network uses machine learning techniques combined with physical principles to predict characteristics of the feedback loop, such as poles, zeros, and gain, which describe how the feedback system behaves across different frequencies.

In general, the physics-informed neural network works by processing transient signals, which are short-term changes in the feedback system's behavior. The physics-informed neural network then extracts features that represent the feedback system's dynamic properties, such as stability and responsiveness. These features are used to create a mathematical model of the feedback loop, called a transfer function, which is then used to generate predicted frequency response. These predicted frequency responses provide insights into how the feedback system performs and include visual tools like Bode plots and pole-zero plots to help engineers assess stability and optimize performance. By combining physical principles with machine learning, examples of the physics-informed neural networks and methods provide predictions that are accurate, interpretable, and applicable across a wide range of devices, including power converters, industrial automation systems, and robotics.

Examples disclosed herein include a physics-informed neural network including an encoder, a decoder, and an output module or head. The encoder processes transient signals to extract features representing dynamic behavior, such as transient characteristics and system stability factors, and encodes these features into a latent space representation. The decoder maps the latent space representation to a loop transfer function, applying regularization techniques to constrain the location and distribution of poles and zeros within predefined physical boundaries. This ensures that the outputs align with physical principles, such as causality, stability, and frequency-domain characteristics. The output head translates the loop transfer function parameters into frequency responses, which may include graphical representations like Bode plots and pole-zero plots, providing diagnostic tools for assessing system stability and causality. This approach ensures that predictions are physically meaningful and interpretable, thereby addressing limitations in methods that rely solely on data-driven techniques.

Examples also include methods for training and deploying the physics-informed neural network. During training, the physics-informed neural network learns to model the loop transfer function by minimizing error between predicted frequency responses and actual measurements using a loss function tailored to the frequency domain. The training process uses both observable data and non-observable data to align predictions with physical principles. During deployment, the trained neural network processes new transient signals to output frequency response data, enabling real-time analysis and optimization of feedback systems. These examples represent a significant advancement in feedback loop modeling by combining machine learning techniques with physical insights. They provide a robust and generalizable framework for analyzing control systems across various applications, including switching-mode power converters, industrial automation, and robotics. By addressing gaps in existing techniques, such as the inability to connect non-observable data like poles and zeros to measurable frequency responses, these aspects ensure accurate and reliable predictions that enhance system design and performance.

This summary is intended to provide an overview of subject matter of the present patent application. It is not intended to provide an exclusive or exhaustive explanation of the examples of the technology. The detailed description is included to provide further information about the present patent application.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
FIG. 1 is a block diagram illustrating a physics-informed neural network configured to model a feedback loop response, according to some examples.
FIG. 2 is a flowchart illustrating a training phase of a physics-informed neural network, shown in FIG. 1, for modeling a loop transfer function, according to some examples.
FIG. 3 is a flowchart illustrating methods for modeling a loop transfer function of a feedback system, according to some examples.
FIG. 4 is a block diagram illustrating the architecture of a physics-informed neural network, including an encoder, decoder, and output module, according to some examples.
FIG. 5 is a block diagram illustrating an example computing environment for implementing a physics-informed neural network, according to some examples.
FIG. 6 is a block diagram of a machine in the example form of a computer system within which instructions may be executed for causing the machine to perform examples of any one or more of the methodologies of the physics-informed neural networks discussed herein.

### DETAILED DESCRIPTION

### Overview

Switching-mode power converters are used in applications like consumer electronics, renewable energy, and industrial automation to convert electrical power efficiently. Their dynamic behavior is affected by load variations, input voltage changes, and system non-linearities. The feedback loop, which continuously monitors and adjusts the system to maintain stability and performance, is central to ensuring reliable operation. Accurately modeling the transfer function of the feedback loop (including poles, zeros, and gain) is challenging because these characteristics, while not directly measurable, are useful for understanding system stability and response.

Conventional modeling techniques, such as linearized and time-averaged approaches, simplify feedback loop analysis but have accuracy limitations due to parasitic effects and the nonlinear nature of switching-mode power converters. These limitations can lead to overshoot, prolonged settling times, or oscillatory behavior, affecting system stability and complicating the optimization of compensation parameters like amplifier gain, resistor values, and capacitor values. Neural networks are also used to model high-order transfer functions of feedback loops but often struggle with generalization when exposed to out-of-distribution data, reducing reliability under varying conditions. Out-of-distribution data refers to input data that deviates significantly from the data used to train the physics-informed neural network the training dataset and represents scenarios or conditions that were not adequately represented in the training dataset, such as transient signals or feedback system responses under extreme conditions. Additionally, machine learning models that estimate frequency responses, such as Bode plots, rely on data-driven methods without physical constraints, making them prone to overfitting and non-physical estimates when inputs are affected by noise or system variations.

Accurately modeling the dynamic behavior of switching-mode power converters promotes reliable and efficient system performance. Addressing the challenges posed by non-linearities, parasitic effects, and the limitations of existing modeling techniques enhances the analysis and optimization of feedback loop responses.

Some of the described examples use a physics-informed neural network (PINN) to model and analyze feedback loop responses in switching-mode power converters. The feedback loop, which monitors and adjusts the system to maintain operating conditions, is modeled by predicting its transfer function, including poles, zeros, and gain. By combining machine learning techniques with physical principles, the examples ensure accurate and interpretable predictions.

The neural network includes a Residual Network based (ResNet-based) encoder, a physics-guided decoder, and an output head. The encoder processes time-domain signals and encodes them into a latent space. The decoder maps these representations to poles, zeros, and gain, applying regularization to constrain their distribution and ensure physically meaningful outputs. The output head translates these predictions into frequency responses, such as Bode plots and pole-zero plots, providing insights into system stability and behavior.

Some of the described examples include training and deployment phases. During training, the network learns to model the transfer function by minimizing error between predicted and actual outputs using a frequency-domain loss function aligned with physical principles. In deployment, the trained model processes new input signals to output observable data, such as gain and phase, and non-observable data, such as poles and zeros, enabling engineers to analyze system properties like stability and causality.

The described examples address challenges in feedback loop modeling by inferring poles and zeros from observable data, improving generalization to handle out-of-distribution data, and reducing non-physical predictions. In particular, the described examples address out-of-distribution data by integrating physical principles into the neural network architecture, ensuring that predictions remain consistent with the physical behavior of the feedback system even when processing out-of-distribution data, thereby reducing the risk of non-physical outputs. The described examples also automate compensation tuning, enhancing the efficiency and adaptability of power converters under varying conditions. The described examples also apply to continuous systems in the Laplace domain and discrete systems in the Z domain, extending their use to industrial automation, robotics, and other control system applications.

The physics-informed neural networks and methods use a machine-learning model to predict the frequency-domain loop response of a control loop in a power supply device based on transient output voltage data. It employs advanced neural network architectures, such as convolutional networks with encoder and decoder sections, to analyze transient voltage waveforms and generate accurate frequency-domain responses. The methodology also includes an optimization framework that iteratively adjusts compensation parameters, such as amplifier gain, resistor values, and capacitor values, to improve performance metrics. This approach enhances loop gain identification and enables automated compensation tuning, increasing the efficiency and adaptability of switched-mode power converters under varying conditions.

The described examples of the physics-informed neural networks and methods introduce features that enhance the modeling and analysis of power converter feedback loops. One advancement is the use of the physics-informed neural network to identify the high-order transfer function of a power converter feedback loop. The physics-informed neural network utilizes a physics-informed decoder to map latent space representations to poles, zeros, and gain, ensuring predictions that are both interpretable and physically accurate. The physics-informed neural network is a machine learning model that integrates physical principles, such as system dynamics and constraints, into its architecture or training process to ensure that its predictions align with the physical behavior of the feedback system being modeled. Unlike conventional neural networks, which rely solely on data-driven methods, a physics-informed neural network incorporates mathematical representations of physical laws, such as stability, causality, and frequency-domain characteristics, to guide its learning and output generation. This ensures that the predicted frequency response characteristics, including the loop transfer function parameters such as poles, zeros, and gain, are physically meaningful and interpretable. This approach combines machine learning techniques with physical principles to provide reliable and meaningful insights into system behavior.

In some examples of the physics-guided decoder, the decoder deterministically maps latent space representations to poles and zeros while incorporating regularization techniques to constrain their distribution. This ensures that the outputs are physically meaningful and interpretable. The regularization process enhances the reliability of predictions and reduces the risk of non-physical outputs, providing a robust framework for accurate modeling of feedback loop responses.

Certain examples also include a customized loss function tailored to the frequency domain. This loss function compares predicted frequency responses, such as Bode plots, to actual measurements, aligning the training process with physical principles. The frequency-domain loss function improves the stability of training and enhances the model's robustness against noise and system variations. By integrating physical principles directly into the optimization process, the examples ensure consistent and reliable performance.

In some examples, the architecture combines a ResNet-based encoder, a physics-guided decoder, and an output head. This end-to-end model translates latent space representations into gain-pole-zero predictions, frequency responses, Bode plots, and pole-zero plots. The combination of machine learning with physical principles ensures interpretability and robustness, providing engineers with a comprehensive tool for analyzing power converter systems, including stability and causality assessments.

Certain examples of the physics-informed neural networks and methods extend the application of physics-informed neural networks beyond power converters to other feedback systems. The methodology applies to both continuous systems in the Laplace domain and discrete systems in the Z domain, offering a versatile framework for control system analysis. This generalization broadens applicability to fields such as industrial automation and robotics, enabling effective analysis across diverse domains.

Finally, some described examples generate pole-zero plots as part of the model output, offering engineers diagnostic tools to assess system stability, causality, and other properties. The inclusion of pole-zero plots provides deeper insights into system behavior and enhances the utility of the model for system design and analysis.

### Physics-Informed Neural Networks

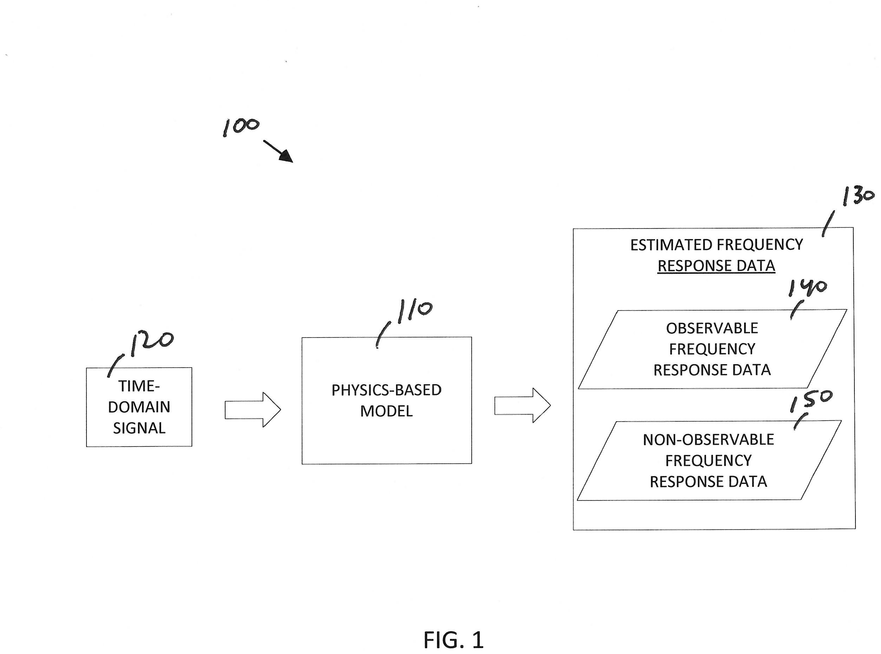

FIG. 1 illustrates examples of a physics-informed neural network 100 described herein. The physics-informed neural network 100 includes a physics-informed model 110. The physics-informed model 110 is a neural network model of a loop transfer function for frequency responses. The loop transfer function is a mathematical representation of the relationship between the input and the output of the feedback loop and describes how the feedback loop responds to different inputs at various frequencies.

Input to the physics-informed model 110 is a time-domain signal 120 (such as a transient input signal). The physics-informed model 110 processes the time-domain signal 120 (as described in detail below) and outputs estimated or predicted frequency response data 130. The predicted frequency response data 130 includes observable frequency response data 140, such as gain and phase. In addition, the predicted frequency response data 130 includes non-observable frequency response data 150, such as the poles and zeros of the loop transfer function.

In general, the physics-informed neural networks 100 and methods include a training phase and a deployment phase. During the training phase, the physics-informed model110 is trained to determine a loop transfer function for frequency responses that accurately determines a frequency response output for a given transient input. During the deployment phase, the trained physics-informed model 110 of the loop transfer function is used to identify the feedback loop response using both observable data and non-observable data.

### Training the Physics-Informed Loop Transfer Function Model

The physics-informed model 110 is trained to determine the loop transfer function for frequency responses that accurately maps a given transient input to the predicted frequency response outputs. This is done in part by optimizing parameters (such as weights and biases) of the physics-informed model 110 such that at the completion of the training phase the trained physics-informed model 110 accurately maps input data to the output data. The physics-informed model is trained on both observable data and non-observable data.

The physics-informed model 110 is a linear time-invariant (LTI) system. LTI systems are useful in the analysis and design of switching-mode power supplies (SMPSs), even though SMPSs themselves are inherently nonlinear, due to the switching action of their semiconductor devices. The linear approximation provided by the LTI system facilitates the effective analysis, design, and optimization of SMPSs.

Mathematically, in some examples, the loop transfer function is given by the equation: $H \left(s\right) = K ∗ \frac{\left(s-{z}_{1}\right) \left(s-{z}_{2}\right) ⋯ \left(s-{z}_{N}\right)}{\left(s-{p}_{1}\right) \left(s-{p}_{2}\right) ⋯ \left(s-{p}_{M}\right)}$ where *H* is the loop transfer function of frequency responses, *K* is the gain (a complex value), *z* is the zeros of the loop transfer function, and *p* is the poles of the loop transfer function. The zeros (*z*) and the poles (*p*) can have both complex and real parts. Moreover, *N* is the number of zeros and *M* is the number of poles.

The poles and zeros of the loop transfer function provide useful physical insights into the feedback loop response across various domains, including frequency response, transient response, stability, and control. For example, poles closer to the imaginary axis contribute to underdamped or oscillatory responses, while poles further away lead to more overdamped responses. Similarly, zeros of the loop transfer function influence frequency response by introducing peaks or dips in the magnitude response and affecting phase shift. Zeros contribute to features such as resonance, bandwidth, and filtering characteristics.

The observable data includes the gain of the frequency response of the loop transfer function. For a LTI system, the gain represents the ratio of the magnitude of the output signal to the magnitude of the input signal at a given frequency. In other words, the gain quantifies how much the system amplifies or attenuates input signals of different frequencies. The gain of the frequency response provides insights into how output magnitude changes with respect to different input frequencies. In a Bode plot, the gain is typically expressed in decibels (dB), which is a logarithmic scale, to conveniently represent a wide range of gain values. Positive dB values indicate amplification, while negative dB values indicate attenuation.

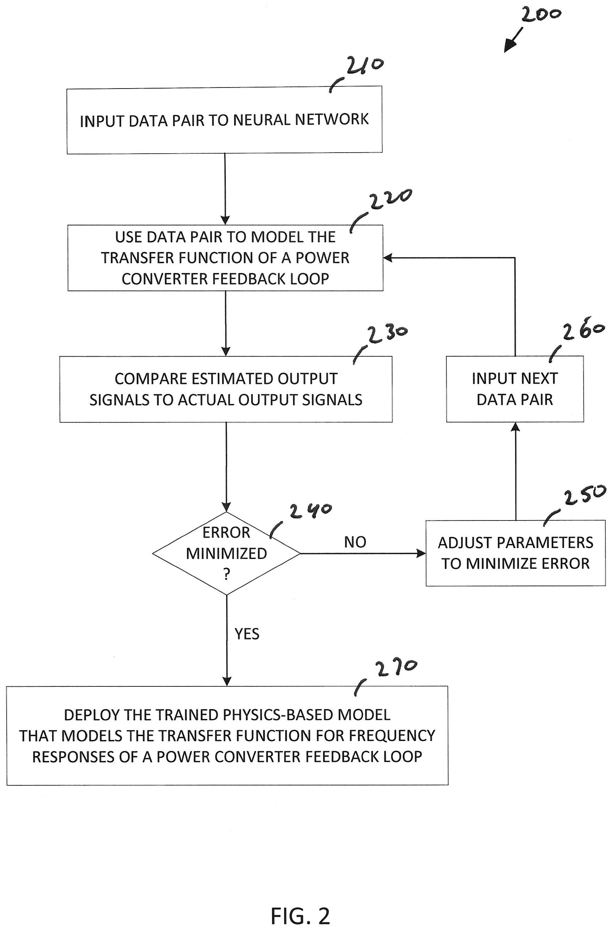

FIG. 2 illustrates examples of a training phase 200 of the physics-informed model 110 shown in FIG. 1. In general, the physics-informed model 110 is trained to model the transfer function for frequency responses of a power converter feedback loop. In some examples, this training involves learning the input-output relationship of the feedback loop based on data pairs. In some examples, the input-output data pairs include input signals (such as transients) and output signals representing the feedback loop's response to the input signals.

The physics-informed model 110 includes a neural network that is designed to model the transfer function for frequency responses of the power converter feedback loop. As shown in FIG. 2, the training phase 200 begins at operation 210 as an input-output data pair is input to the neural network. Operation 220 uses the data pair to model the loop transfer function of a power converter feedback loop. This allows the physics-informed model 110 to learn how to map the input signals to the corresponding output signals.

In some examples, this learning is achieved by adjusting the parameters of the model (such as the weights and biases). Specifically, operation 230 compares the predicted output signals to the actual output signals and determines any error between the two. Operation 240 determines whether the error between the predicted output signals and the actual output signals has been minimized. In some examples, the actual output signals are the gain and the phase that have been physically measured. And the predicted output signal are the predicted gain and phase from a Bode plot. Operation 240 compares the measured gain and phase and the predicted gain and phase and adjusts the parameters of the physics-informed model to minimize error.

If the error has not been minimized, then operation 250 adjusts the parameters of the neural network to further minimize the error. These parameters include the weights and biases of the neural network. Operation 260 then submits another input-output data pair as input to the neural network, and the iterative process begins again until the error is minimized. In some examples, the error is minimized when the error drops below a minimum error threshold.

When the error is minimized, then in operation 270 the trained physics-informed model 110 is deployed. As explained in detail below, the physics-informed model 110 estimates the frequency response of the power converter feedback loop for new time-domain input signals. These estimations allow for the real-time monitoring, control, or optimization of the power converter based on the model's estimations.

### Modeling the Loop Transfer Function

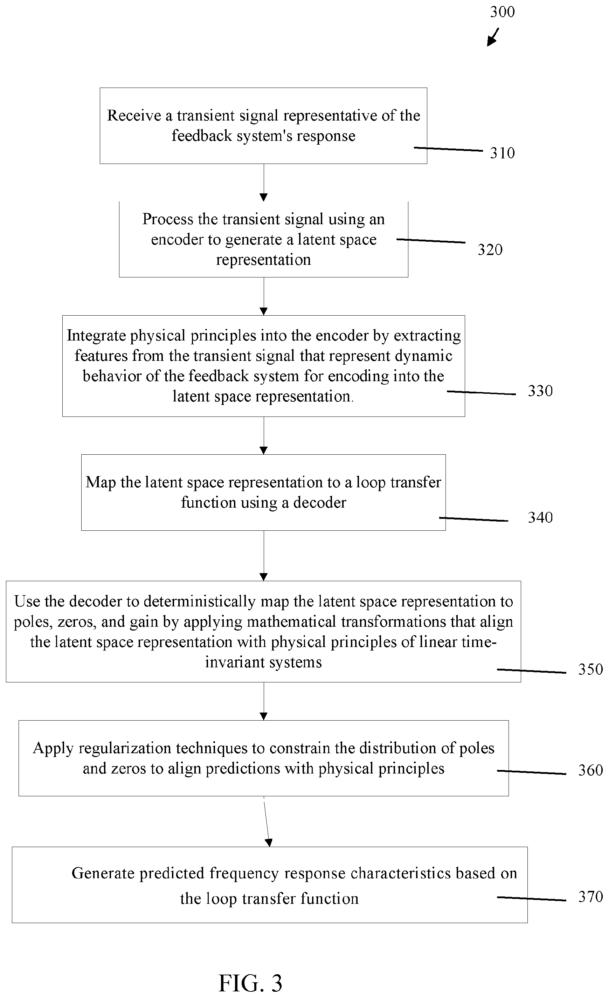

FIG. 3 is a flowchart illustrating methods for modeling a loop transfer function of a feedback system, according to some examples. In general, the physics-informed methods generate predicted frequency response characteristics based on transient signals. In some examples the method 300 uses a physics-informed neural network to process new transient input signals into both observable data and non-observable data. The observable data includes gain and phase while the non-observable data includes poles and zeros. This ensures that the feedback system can be monitored and adjusted in real-time based on its dynamic behavior. In some examples, the physics-information neural network is trained using transient input signals and corresponding frequency-domain measurements to align the predicted frequency response characteristics with physical principles.

Although the example methods illustrated in FIG. 3 illustrate a particular sequence of operations, the sequence may be altered. For example, some of the operations depicted may be performed in parallel or in a different sequence that does not materially affect the function of the methods. In some examples, different components of example devices or systems that implement the methods may perform functions at substantially the same time or in a particular sequence.

Referring to FIG. 3, the method 300 for modeling a loop transfer function of a feedback system begins at operation 310 with reception of at least one transient signal representative of the feedback system's response. In some examples, the transient signal is acquired from sensors or signal acquisition modules configured to monitor the dynamic behavior of the feedback system. The transient signal may include time-domain data that reflects the feedback system's response to changes in input conditions, such as load variations, disturbances, or other operational changes. In some examples, preprocessing is performed on the transient signal to remove noise or artifacts before further processing.

Operation 320 processes the transient signal using an encoder to generate a latent space representation. The encoder can include a neural network architecture, such as a residual neural network, which is configured to extract features from the transient signal. In certain examples the features extracted include transient characteristics and feedback system stability factors. In some examples, the encoder processes time-domain signals and integrates physical principles into the feature extraction process by identifying transient characteristics and feedback system stability factors. These features represent the dynamic behavior of the feedback system and ensure that the latent space representation aligns with the physical behavior of the feedback system. In certain examples, the encoder applies mathematical transformations to encode the transient signal into a compact and interpretable representation. In certain examples the encoder generates a latent space representation by processing the transient signal, and the encoder integrates physical principles by extracting features from the transient signal.

The physical principles are used as a guide by the encoder to extract features, such as transient characteristics and feedback system stability factors, from the transient signal that is representative of the feedback system's response. These features are used to generate a latent space representation that aligns with the physical behavior of the feedback system. The decoder then uses this representation to map the loop transfer function, ensuring that the outputs (poles, zeros, and gain) are physically meaningful and consistent with the system's dynamic and stability properties. By incorporating these features, the physics-informed neural network ensures accurate modeling and analysis of the feedback loop response.

Transient characteristics refer to the dynamic properties of a feedback system's response during non-steady-state conditions, such as transitions caused by changes in input or disturbances. These characteristics include overshoot, settling time, rise time, oscillations, and damping behavior, which collectively describe how the system reacts and stabilizes after a disturbance. Feedback system stability factors are the properties and parameters that determine whether the feedback system maintains stable operation under various conditions. These factors include pole location, gain margin, phase margin, frequency response, and feedback loop dynamics, which influence the system's ability to reject disturbances, regulate output, and avoid oscillatory or divergent behavior.

At operation 330 physical principles are integrated into the encoder. In certain examples this is achieved by extracting features from the transient signal that represent dynamic behavior of the feedback system. These extracted features are encoded into the latent space representation.

Operation 340 maps the latent space representation to a loop transfer function using a decoder. In some examples the decoder includes a physics-information neural network configured to deterministically map the latent space representation to poles, zeros, and gain. Physical principles are integrated into the decoder to ensure that the outputs are physically meaningful and consistent with the behavior of linear time-invariant systems.

Operation 350 uses the decoder to deterministically map the latent space representation to poles, zeros, and gain. This is performed by applying mathematical transformations that align the latent space representation with physical principles of linear time-invariant systems. The decoder separates the latent space representation into distinct components corresponding to poles, zeros, and gain. In some examples, the mathematical transformations applied by the decoder include domain-specific operations that enforce the physical principles of linear time-invariant systems, and include transformations that preserve causality, stability, and frequency-domain characteristics by ensuring the poles and zeros are located within regions defined by the feedback system's transfer function constraints.

The decoder deterministically maps the latent space representation to poles, zeros, and gain. The term "deterministically" means that the decoder performs the mapping from the latent space representation to poles, zeros, and gain in a predictable and repeatable manner, without relying on randomness or probabilistic methods. The mapping process is governed by defined mathematical transformations and physical principles, ensuring that for a given latent space representation, the decoder consistently produces the same outputs (poles, zeros, and gain). This deterministic approach ensures that the results are interpretable, physically meaningful, and aligned with the behavior of linear time-invariant systems.

A time-invariant system refers to a system whose behavior and characteristics remain constant over time, meaning its response to a given input does not depend on when the input is applied. The system's transfer function, which defines the relationship between input and output, is fixed and includes stable properties such as poles, zeros, and gain. Linear time-invariant (LTI) systems have predictable and consistent behavior makes them useful for modeling feedback loops in control systems. The method 300 incorporate the principles of time-invariant systems into the physics-informed neural network, ensuring that the predicted poles, zeros, and gain align with the physical behavior of such systems, thereby maintaining stability, causality, and consistency in the generated predicted frequency responses.

As shown in operation 360, in some examples, the decoder applies one or more regularization techniques to constrain the location and distribution of poles and zeros within predefined physical boundaries. This mapping process, in certain examples, involves domain-specific mathematical transformations that preserve causality, stability, and frequency-domain characteristics, ensuring that the poles and zeros are located within regions defined by the feedback system's transfer function constraints.

Operation 370 generates predicted frequency response characteristics based on the loop transfer function. The frequency response characteristics can include gain and phase information that describes the behavior of the feedback system across different frequencies. The frequency response may be generated using an output module configured to translate the poles, zeros, and gain into frequency-domain data. In some examples, graphical representations, such as Bode plots and pole-zero plots, are created to provide diagnostic tools for assessing feedback system stability and causality. These graphical representations can used to analyze and optimize the feedback system's performance.

The method described in FIG. 3 may be implemented by a physics-informed neural network operating on a processor. The sequence of operations may be adjusted based on specific requirements or configurations of the feedback system. For example, preprocessing of the transient signal may be performed before encoding, or the generation of graphical representations may occur in parallel with the generation of frequency-domain data. In some examples, the method may be applied to feedback systems in various domains, including electronic, mechanical, and electromechanical systems.

### Deployment of the Physics-informed Loop Transfer Function Model

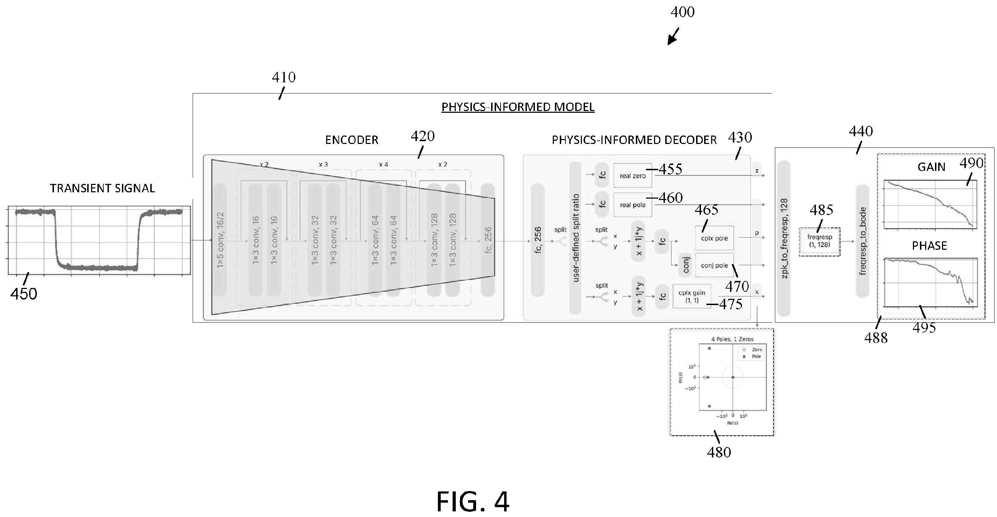

FIG. 4 illustrates examples of the physics-informed neural network used to identify a feedback loop response of a switching-mode power converter using both observable data and non-observable data. As shown in FIG. 4, a physics-informed neural network 400 (which is an example of the physics-informed neural network 100) includes a physics-informed model 410 (which is an example of the physics-informed model 110). The physics-informed model 410 includes an encoder 420, a physics-informed decoder 430, and an output head 440.

The input to the physics-informed model 410 is a transient signal 450. In this example, the encoder 420 is a residual neural network encoder, which is a type of encoder architecture based on residual neural networks that uses residual learning. The encoder 420 encodes the transient signal 450 into a latent space to obtain transient embeddings. In these examples, the transient embeddings are divided into 256 parts. In some examples, the encoder 420 is configured to process time-domain signals and incorporates physical principles by extracting features that represent transient characteristics and device stability factors for encoding into the latent space representation.

In the examples shown in FIG. 4, the physics-informed decoder 430 maps the transient embeddings to the actual loop transfer functions. The physics-informed decoder 430 then applies regularization to constrain the distribution of the location of poles and zeros for the predicted loop transfer function. As shown in FIG. 4, the physics-informed decoder 430 separates or splits the 256 parts of the transient embeddings such that each of the parts corresponds to a predicted pole, zero, or gain. In some examples, a user defines the number of splits. The zeros and poles can be a real number, a complex conjugate pair, or mix of the two. In these examples, the gain is assumed to be a complex gain.

As shown in the examples of FIG. 4, the boxes with the dashed lines are meant to depict the predicted output of the physics-informed model 410. Also shown in FIG. 4 are the non-observable data including a real zero 455, a real pole 460, a complex pole 465, a complex conjugate pole pair 470, and a complex gain 475. In addition, physics-informed model 410 outputs a pole-zero plot 480 showing the location of the poles and zeros of the loop transfer function.

Engineers can utilize the pole-zero plot 480 as an additional reference to estimate certain properties of the system such as the stability of the system. This can be useful for both causal systems and anti-causal systems. A causal system is a system where the output depends only on present and past inputs, meaning the system does not anticipate future inputs. This ensures that the system operates in real-time and adheres to physical constraints. An anti-causal system, on the other hand, is a system where the output depends on present and future inputs, allowing the system to anticipate or predict future behavior. Both causal and anti-causal systems are relevant in analyzing feedback loop responses, as they describe different ways the system processes input signals. The stability of either type of system can be determined from the pole-zero plot 480.

The output head 440 transforms the data output from the physics-informed decoder 430 into Bode plots. The output head 440 does this by first translating the poles, zeros, and gains into frequency responses 485. The output head 440 generates a predicted frequency response based on the loop transfer function, where the predicted frequency response provides predicted frequency characteristics describing the feedback loop response. The output head 440 then translates the predicted frequency responses into a Bode plot 488, including a magnitude plot 490 (including the gain) and a phase plot 495. The magnitude plot 490 shows the logarithm of the magnitude of the loop transfer function as a function of frequency and shows how the gain varies with frequency. The phase plot 495 shows the phase shift of the loop transfer function as a function of frequency and shows how the phase response varies with frequency. Together, the magnitude plot 490 and the phase plot 495 identify and provide a comprehensive view of the feedback loop response in the form of frequency response characteristics. These frequency response characteristics include gain, pole, and zero estimations, frequency response, Bode plots, and pole-zero plots.

The output head 440 uses a deterministic process to transform the poles and zeros into the Bode plot 488. The term "deterministic" means that the output or behavior is determined by the input such that for a given input there is a unique and predictable output. Further, the output head 440 is differentiable so that, as explained above, during training the measured gain and phase can be compared to the Bode plot 488. This error is used to adjust the parameters of the physics-informed model 410 to minimize error.

### Computing Environment

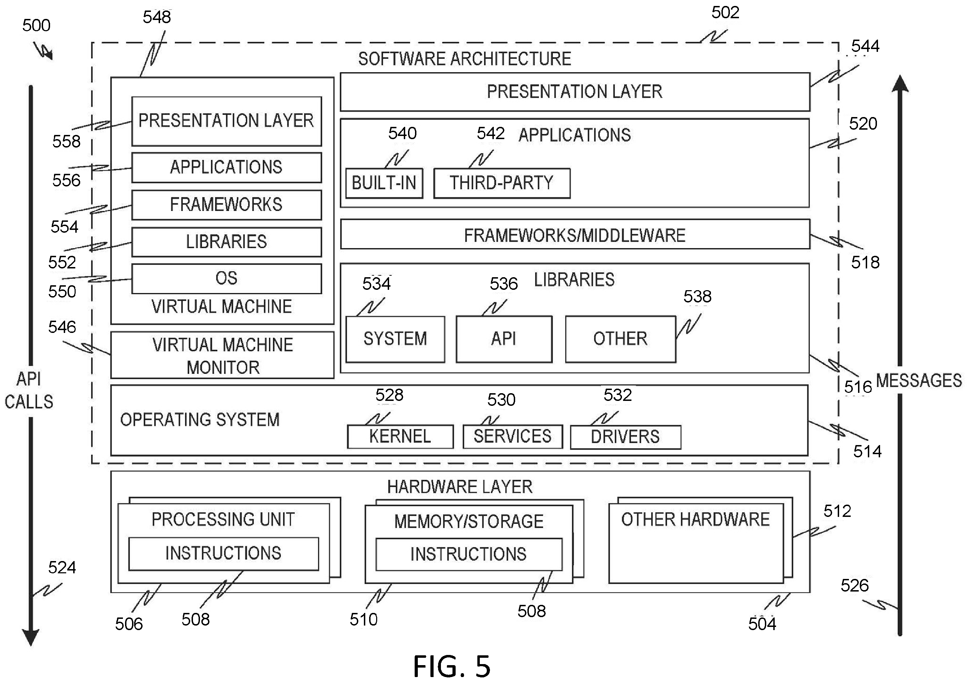

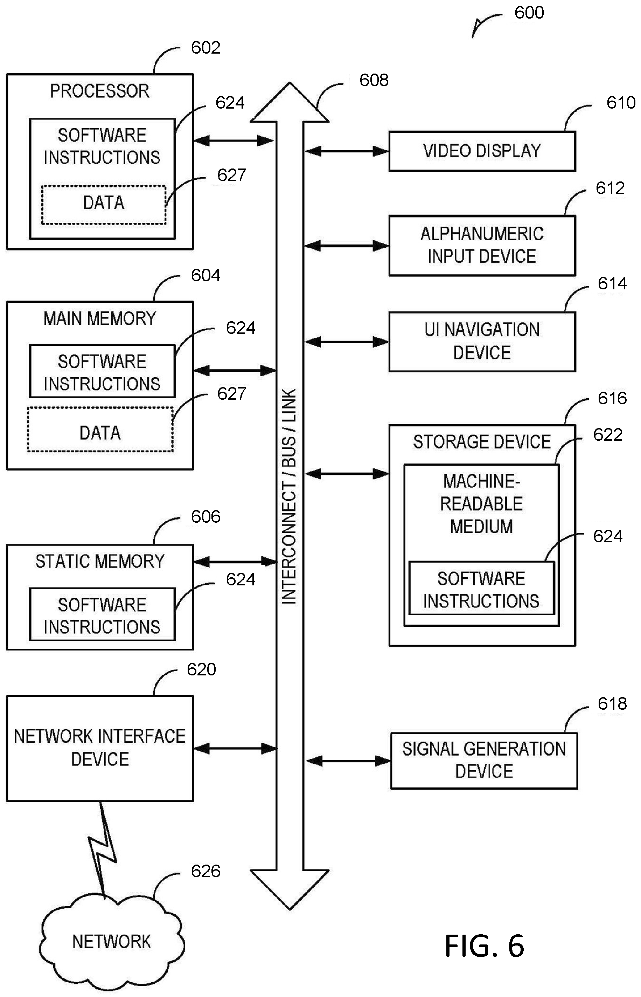

FIG. 5 is a block diagram showing an example of an architecture 500 for a computing device on which examples of the physics-informed neural network 100 may be implemented. The architecture 500 may be used in conjunction with various hardware configurations as described above. FIG. 5 is merely a non-limiting example of a computing device supporting a software architecture 502, but it will be understood that many other architecture arrangements may be implemented to facilitate the functionality described herein. A representative example of a hardware layer 504 is also illustrated and can represent, for example, any of the above referenced computing devices or hardware components. In some examples, the hardware layer 504 may be implemented according to the architecture of the computer system of FIG. 6.

The hardware layer 504 comprises one or more processing units 506 having executable instructions 508. Executable instructions 508 represent the executable instructions of the software architecture 502, including implementation of the methods, modules, subsystems, and components, and so forth described herein and may also include memory and/or storage components 510, which also have executable instructions 508. Hardware layer 504 may also comprise other hardware as indicated by other hardware 512 which represents any other hardware of the hardware layer 504, such as the other hardware illustrated as part of the software architecture 502.

In the example architecture of FIG. 5, the software architecture 502 may be conceptualized as a stack of layers where each layer provides particular functionality. For example, the software architecture 502 may include layers such as an operating system 514, libraries 516, frameworks/middleware 518, applications 520, and presentation layer 544. Operationally, the applications 520 and/or other components within the layers may invoke messaging (e.g., with application programming interface (API) messages such as API calls 524) through the software stack and access a response, returned values, and so forth (e.g., illustrated as messages 526 in response to the API calls 524). The layers illustrated are representative in nature and not all software architectures have all layers. For example, some mobile or special purpose operating systems may not provide a frameworks/middleware 518, while others may provide such a layer. Other software architectures may include additional or different layers.

The operating system 514 may manage hardware resources and provide common services. The operating system 514 may include, for example, a kernel 528, services 530, and drivers 532. The kernel 528 may act as an abstraction layer between the hardware and the other software layers. For example, the kernel 528 may be responsible for memory management, processor management (e.g., scheduling), component management, networking, security settings, and so on. The services 530 may provide other common services for the other software layers. In some examples, the services 530 include an interrupt service. The interrupt service may detect the receipt of an interrupt and, in response, cause the software architecture 502 to pause its current processing and execute an interrupt service routine (ISR) when an interrupt is accessed.

The drivers 532 may be responsible for controlling or interfacing with the underlying hardware. For instance, the drivers 532 may include display drivers, camera drivers, Bluetooth^{®} drivers, flash memory drivers, serial communication drivers (e.g., Universal Serial Bus (USB) drivers), Wi-Fi^{®} drivers, NFC drivers, audio drivers, power management drivers, and so forth depending on the hardware configuration.

The libraries 516 may provide a common infrastructure that may be utilized by the applications 520 and/or other components and/or layers. The libraries 516 typically provide functionality that allows other software components/modules to perform tasks in an easier fashion than to interface directly with the operating system 514 functionality (e.g., kernel 528, services 530 and/or drivers 532). The libraries 516 may include system libraries 534 (e.g., C standard library) that may provide functions such as memory allocation functions, string manipulation functions, mathematic functions, and the like. In addition, the libraries 516 may include API libraries 536 such as media libraries (e.g., libraries to support presentation and manipulation of various media formats), graphics libraries (e.g., libraries to render two-dimensional and three-dimensional in a graphic content on a display), database libraries (e.g., libraries that provide various relational database functions), web libraries (e.g., libraries that provide web browsing functionality), and the like. The libraries 516 may also include a wide variety of other libraries 538 to provide many other APIs to the applications 520 and other software components/modules.

The frameworks/middleware 518 may provide a higher-level common infrastructure that may be utilized by the applications 520 and/or other software components/modules. For example, the frameworks/middleware 518 may provide various graphic user interface (GUI) functions, high-level resource management, high-level location services, and so forth. The frameworks/middleware 518 may provide a broad spectrum of other APIs that may be utilized by the applications 520 and/or other software components/modules, some of which may be specific to a particular operating system or platform.

The applications 520 may include built-in applications 540 and/or third-party applications 542. Representative examples of the built-in applications 540 on a mobile device may include, but are not limited to, a contacts application, a browser application, a book reader application, a location application, a media application, a messaging application, and/or a game application. Third-party applications 542 may include any of the built-in applications as well as a broad assortment of other applications. In a certain example, the third-party application 542 (e.g., an application developed using the Android^{™} or iOS^{™} software development kit (SDK) by an entity other than the vendor of the particular platform) may be mobile software running on a mobile operating system such as iOS^{™}, Android^{™}, or other mobile computing device operating systems. In this example, the third-party application 542 may invoke the API calls 524 provided by the mobile operating system such as operating system 514 to facilitate functionality described herein.

The applications 520 may utilize built in operating system functions (e.g., kernel 528, services 530 and/or drivers 532), libraries (e.g., system libraries 534, API libraries 536, and other libraries 538), frameworks/middleware 518 to create user interfaces to interact with users of the system. Alternatively, or additionally, in some systems, interactions with a user may occur through a presentation layer, such as presentation layer 544. In these systems, the application/module "logic" can be separated from the aspects of the application/module that interact with a user.

Some software architectures utilize virtual machines. In the example of FIG. 5, this is illustrated by virtual machine 548. A virtual machine creates a software environment where applications/modules can execute as if they were executing on a hardware computing device. A virtual machine can be hosted by a host operating system (operating system 514) and may include a virtual machine monitor 546 that manages the operation of the virtual machine as well as the interface with the host operating system (i.e., operating system 514). A software architecture executes within the virtual machine 548 such as an operating system 550, libraries 552, frameworks/middleware 554, applications 556 and/or presentation layer 558. These layers of software architecture executing within the virtual machine 548 can be the same as corresponding layers previously described or may be different.

Certain embodiments are described herein as including logic or a number of components, modules, or mechanisms. Components may constitute either software components (e.g., code embodied on a non-transitory machine-readable medium or in a transmission signal) or hardware-implemented components. A hardware-implemented component is a tangible unit capable of performing certain operations and may be configured or arranged in a certain manner. In example embodiments, one or more computer systems (e.g., a standalone, client, or server computer system) or one or more hardware processors may be configured by software (e.g., an application or application portion) as a hardware-implemented component that operates to perform certain operations as described herein.

In various embodiments, a hardware-implemented component may be implemented mechanically or electronically. For example, a hardware-implemented component may comprise dedicated circuitry or logic that is permanently configured (e.g., as a special-purpose processor, such as a field programmable gate array (FPGA) or an application-specific integrated circuit (ASIC)) to perform certain operations. A hardware-implemented component may also comprise programmable logic or circuitry (e.g., as encompassed within a general-purpose processor or another programmable processor) that is temporarily configured by software to perform certain operations. It will be appreciated that the decision to implement a hardware-implemented component mechanically, in dedicated and permanently configured circuitry, or in temporarily configured circuitry (e.g., configured by software) may be driven by technical, cost, or time considerations.

Accordingly, any of the hardware components or modules described herein should be understood to encompass a tangible entity, be that an entity that is physically constructed, permanently configured (e.g., hardwired), or temporarily or transitorily configured (e.g., programmed) to operate in a certain manner and/or to perform certain operations described herein. Considering embodiments in which hardware-implemented components are temporarily configured (e.g., programmed), each of the hardware-implemented components need not be configured or instantiated at any one instance in time. For example, where the hardware-implemented components comprise, a general-purpose processor configured using software, the general-purpose processor may be configured as respective different hardware-implemented components at different times. Software may accordingly configure a processor, for example, to constitute a particular hardware-implemented component at one instance of time and to constitute a different hardware-implemented component at a different instance of time.

Hardware-implemented components can provide information to, and receive information from, other hardware-implemented components. Accordingly, the described hardware-implemented components may be regarded as being communicatively coupled. Where multiple of such hardware-implemented components exist contemporaneously, communications may be achieved through signal transmission (e.g., over appropriate circuits and buses that connect the hardware-implemented components). In embodiments in which multiple hardware-implemented components are configured or instantiated at various times, communications between such hardware-implemented components may be achieved, for example, through the storage and retrieval of information in memory structures to which the multiple hardware-implemented components have access. For example, one hardware-implemented component may perform an operation, and store the output of that operation in a memory device to which it is communicatively coupled. A further hardware-implemented component may then, later, access the memory device to retrieve and process the stored output. Hardware-implemented components may also initiate communications with input or output devices, and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented devices, systems, or machines that operate to perform one or more operations or functions. Similarly, the methods described herein may be at least partially processor-implemented. For example, at least some of the operations of a method may be performed by one or more processors or processor-implemented devices, systems, or machines. The performance of certain of the operations may be distributed among the one or more processors, not only residing within a single machine, but deployed across a number of machines. In some example embodiments, the processor or processors may be in a single location (e.g., within a home environment, an office environment, or a server farm), while in other embodiments the processors may be distributed across a number of locations.

Example embodiments may be implemented in digital electronic circuitry, or in computer hardware, firmware, or software, or in combinations of them. Example embodiments may be implemented using a computer program product, e.g., a computer program tangibly embodied in an information carrier, e.g., in a machine-readable medium for execution by, or to control the operation of, data processing apparatus, e.g., a programmable processor, a computer, or multiple computers. A computer program can be written in any form of programming language, including compiled or interpreted languages, and it can be deployed in any form, including as a standalone program or as a software module, subroutine, or other unit suitable for use in a computing environment. A computer program can be deployed to be executed on one computer or on multiple computers at one site or distributed across multiple sites and interconnected by a communication network.

The computing system can include clients and servers. A client and server are generally remote from each other and typically interact through a communication network. The relationship of client and server arises by virtue of computer programs running on the respective computers and having a client-server relationship to each other. In embodiments deploying a programmable computing system, it will be appreciated that both hardware and software architectures merit consideration. Specifically, it will be appreciated that the choice of whether to implement certain functionality in permanently configured hardware (e.g., an ASIC), in temporarily configured hardware (e.g., a combination of software and a programmable processor), or in a combination of permanently and temporarily configured hardware may be a design choice. Below are set out hardware (e.g., machine) and software architectures that may be deployed, in various example embodiments.

FIG. 6 is a block diagram of a machine in the example form of a computer system 600 within which software instructions 624 may be executed for causing the machine to perform any one or more of the methodologies discussed herein. In alternative embodiments, the machine operates as a standalone device or may be connected (e.g., networked) to other machines. In a networked deployment, the machine may operate in the capacity of a server or a client machine in server-client network environment, or as a peer machine in a peer-to-peer (or distributed) network environment. The machine may be a personal computer (PC), a tablet PC, a personal digital assistant (PDA), a cellular telephone, a web appliance, a network router, switch, or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 600 includes a processor 602 (e.g., a central processing unit (CPU), a graphics processing unit (GPU), or both), a main memory 604, and a static memory 606, which communicate with each other via an interconnect, bus, or link 608. The computer system 600 may further include a video display unit 610 (e.g., a liquid crystal display (LCD) or a cathode ray tube (CRT)). The computer system 600 may also include an alphanumeric input device 612 (e.g., a keyboard or a touch-sensitive display screen), a user interface (UI) navigation (or cursor control) device 614 (e.g., a mouse), a storage device 616, a signal generation device 618 (e.g., a speaker), and a network interface device 620 that can communicate over a network 626.

The storage device 616 includes a machine-readable medium 622 on which is stored one or more sets of data structures and software instructions 624 (e.g., software) embodying or utilized by any one or more of the methodologies or functions described herein. The software instructions 624 may also reside, completely or at least partially, within the main memory 604 and/or within the processor 602 during execution thereof by the computer system 600, with the main memory 604 and the processor 602 also constituting a machine-readable medium 622. The software instructions can also be stored as and interact with data 627 stored on the processor 602, the main memory 604, or both.

While the machine-readable medium 622 is shown in an example embodiment to be a single medium, the term "machine-readable medium" may include a single medium or multiple media (e.g., a centralized or distributed database, and/or associated caches and servers) that store the software instructions 624 or data structures. The term "machine-readable medium" shall also be taken to include any tangible, non-transitory medium that is capable of storing, encoding, or carrying the software instructions 624 for execution by the machine and that cause the machine to perform any one or more of the methodologies of the present disclosure, or that is capable of storing, encoding, or carrying data structures utilized by or associated with the software instructions 624. The term "machine-readable medium" shall accordingly be taken to include, but not be limited to, solid-state memories, and optical and magnetic media. Certain examples of a machine-readable medium 622 include non-volatile memory, including by way of example semiconductor memory devices, e.g., erasable programmable read-only memory (EPROM), electrically erasable programmable read-only memory (EEPROM), and flash memory devices; magnetic disks such as internal hard disks and removable disks; magneto-optical disks; and compact disc read-only memory (CD-ROM) and digital versatile disc read-only memory (DVD-ROM) disks. A machine-readable medium as used herein is not a transmission medium.

### Various Notes and Examples

Example 1 is a physics-informed neural network for identifying a feedback loop response of a device, comprising: an encoder configured to process a transient signal and encode the transient signal into a latent space representation; a decoder configured to map the latent space representation to a loop transfer function, wherein the loop transfer function includes, poles and zeros, and wherein the decoder integrates physical principles to ensure the outputs are physically meaningful and interpretable; and an output head configured to generate a predicted frequency response based on the loop transfer function, wherein the predicted frequency response provides predicted frequency characteristics describing the feedback loop response.

In Example 2, the subject matter of Example 1 includes, wherein the encoder is configured to process time-domain signals and incorporates physical principles by extracting features that represent transient characteristics and device stability factors for encoding into the latent space representation.

In Example 3, the subject matter of Examples 1-2 includes, wherein the decoder deterministically maps the latent space representation to poles, zeros, and gain, ensuring physically accurate outputs.

In Example 4, the subject matter of Examples 1-3 includes, wherein the decoder applies regularization techniques to constrain the distribution of poles and zeros, aligning predictions with physical principles to improve interpretability.

In Example 5, the subject matter of Examples 1-4 includes, wherein the output head is further configured to generate predicted frequency response data that includes both observable data, including gain and phase information, and non-observable data, including poles and zeros derived from the loop transfer function.

In Example 6, the subject matter of Example 5 includes, wherein the output head generates graphical representations of the predicted frequency response, including Bode plots and pole-zero plots, to provide diagnostic tools for assessing device stability and causality.

In Example 7, the subject matter of Examples 1-6 includes, wherein the physics-informed neural network is trained using transient input signals and corresponding frequency-domain measurements to align predictions with physical principles.

In Example 8, the subject matter of Examples 1-7 includes, wherein the physics-informed neural network integrates physical principles to improve generalization and reduce the risk of non-physical predictions when processing out-of-distribution data, and is further configured to iteratively adjust compensation parameters of the device, including amplifier gain, resistor values, and capacitor values, to optimize performance metrics of the device based on the predicted frequency response.

Example 9 is a method for modeling a loop transfer function of a feedback system, comprising: receiving a transient signal representative of the feedback system's response; processing the transient signal using an encoder to generate a latent space representation, wherein the encoder integrates physical principles; mapping the latent space representation to a loop transfer function using a decoder, wherein the loop transfer function includes, poles and zeros, and wherein physical principles are integrated into the decoder to ensure the outputs are physically meaningful; and generating predicted frequency response characteristics based on the loop transfer function, wherein the predicted frequency response characteristics describe the feedback system's behavior.

In Example 10, the subject matter of Example 9 includes, wherein processing the transient signal further comprises integrating physical principles into the encoder by extracting features from the transient signal that represent dynamic behavior of the feedback system for encoding into the latent space representation.

In Example 11, the subject matter of Example 10 includes, wherein extracting features further comprises extracting transient characteristics and feedback system stability factors.

In Example 12, the subject matter of Examples 9-11 includes, wherein the decoder deterministically maps the latent space representation to poles, zeros, and gain by applying mathematical transformations that align the latent space representation with physical principles of linear time-invariant systems, wherein the decoder separates the latent space representation into distinct components corresponding to poles, zeros, and gain., and applies regularization techniques to constrain the location and distribution of poles and zeros within predefined physical boundaries to ensure the outputs are interpretable and consistent with the feedback system's behavior.

In Example 13, the subject matter of Example 12 includes, wherein the mathematical transformations applied by the decoder include domain-specific operations that enforce the physical principles of linear time-invariant systems, comprising transformations that preserve causality, stability, and frequency-domain characteristics by ensuring the poles and zeros are located within regions defined by the system's transfer function constraints.

In Example 14, the subject matter of Examples 9-13 includes, wherein the decoder applies regularization techniques to constrain the distribution of poles and zeros to align the predicted frequency response characteristics with physical principles.

In Example 15, the subject matter of Examples 9-14 includes, generating graphical representations of the predicted frequency response characteristics, including Bode plots and pole-zero plots, to provide diagnostic tools for assessing feedback system stability and causality.

In Example 16, the subject matter of Examples 9-15 includes, wherein the physics-informed neural network is trained using transient input signals and corresponding frequency-domain measurements to align the predicted frequency response characteristics with physical principles.

In Example 17, the subject matter of Examples 9-16 includes, wherein the physics-informed neural network processes new transient input signals during deployment to output observable data, including gain and phase, and non-observable data, including poles and zeros.

Example 18 is a non-transitory computer-readable medium storing instructions that, when executed by a processor, cause the processor to perform a method for modeling a feedback loop response of a switching-mode power converter, the method comprising: receiving a transient signal representative of the feedback loop response of the switching-mode power converter; generating a latent space representation, using an encoder, by processing the transient signal, wherein the encoder integrates physical principles by extracting features from the transient signal; mapping the latent space representation to a loop transfer function using a decoder, wherein the loop transfer function includes, poles and zeros, and wherein the decoder applies regularization techniques to constrain the location and distribution of poles and zeros within predefined physical boundaries to ensure physically meaningful and interpretable outputs; minimizing error between predicted frequency responses and actual measurements using a loss function tailored to the frequency domain, wherein the loss function aligns the training process with physical principles; and generating a predicted frequency response based on the loop transfer function, wherein the predicted frequency response provides predicted frequency characteristics describing the feedback loop response.

In Example 19, the subject matter of Example 18 includes, wherein the predicted frequency response generated by the processor includes graphical representations, comprising Bode plots and pole-zero plots, to provide diagnostic tools for assessing stability and causality of the switching-mode power converter.

In Example 20, the subject matter of Example 19 includes, wherein the encoder extracts features from the transient signal that represent dynamic behavior, including transient characteristics and system stability factors, for encoding into the latent space representation.

Example 21 is a method for modeling a switching-mode power converter, comprising: training a physics-informed model to model a loop transfer function for frequency responses of a feedback loop of the switching-mode power converter, wherein the training uses poles and zeros of the loop transfer function; and deploying the trained physics-informed model to identify frequency responses of a feedback loop given a transient signal.

In Example 22, the subject matter of Example 21 includes, outputting predicted frequency response data from the trained physics-informed model, wherein the predicted frequency response data includes both observable data and non-observable data.

In Example 23, the subject matter of Example 22 includes, wherein the observable data includes gain and phase data and the non-observable data includes poles and zeros identified by the physics-informed loop transfer function model.

Example 24 is a method for identifying frequency characteristics of a feedback loop in a switching-mode power converter, comprising: encoding a transient signal into latent space using a residual neural network encoder to obtain a transient embedding; mapping the transient embedding to a loop transfer function for frequency responses of the feedback loop to obtain poles and zeros of the loop transfer function; and translating the poles and zeros into frequency responses to obtain the frequency characteristics.

In Example 25, the subject matter of Example 24 includes, applying regularization to constrain a distribution of a location of the poles and zeros.

In Example 26, the subject matter of Examples 24-25 includes, splitting the transient embedding into a plurality of transient embeddings such that each of the plurality of transient embeddings corresponds to a predicted pole, zero, or gain.

In Example 27, the subject matter of Example 26 includes, generating a pole-zero plot showing a location of poles and zeros of the loop transfer function.

In Example 28, the subject matter of Examples 24-27 includes, translating the frequency responses into a Bode plot including a magnitude plot and a phase plot.

In Example 29, the subject matter of Examples 24-28 includes, wherein the frequency characteristics include gain estimations, pole estimations, zero estimations, Bode plots, and pole-zero plots.

Example 30 is a physics-informed neural network for identifying a feedback loop response of a switching-mode power converter, comprising: a physics-informed model for modeling a loop transfer function for frequency responses, wherein the physics-informed model includes: an encoder for encoding a transient signal into a latent space to obtain a transient embedding; a physics-informed decoder that maps the transient embedding to the loop transfer function and obtains poles and zeros of the loop transfer function; an output head that translates the poles and zeros into a frequency response that identifies the feedback loop response by providing frequency characteristics that describe the feedback loop response.

In Example 31, the subject matter of Example 30 includes, wherein the physics-informed decoder separates the transient embedding into poles, zeros, and gain.

In Example 32, the subject matter of Examples 30-31 includes, wherein the output head translates the frequency response into a Bode plot.

Example 33 is at least one machine-readable medium including instructions that, when executed by processing circuitry, cause the processing circuitry to perform operations to implement of any of Examples 1-32.

Example 34 is an apparatus comprising means to implement of any of Examples 1-32.

Example 35 is a system to implement of any of Examples 1-32.

Example 36 is a method to implement of any of Examples 1-32.

Each of the non-limiting examples described herein may stand on its own or may be combined in various permutations or combinations with one or more of the other examples.

The above detailed description includes references to the accompanying drawings, which form a part of the detailed description. The drawings show, by way of illustration, certain examples in which aspects of this disclosure may be practiced. These embodiments are also referred to herein as "examples." Such examples may include elements in addition to those shown or described. However, the present inventors also contemplate examples in which only those elements shown or described are provided. Moreover, the present inventors also contemplate examples using any combination or permutation of those elements shown or described (or one or more claims thereof), either with respect to a particular example (or one or more claims thereof), or with respect to other examples (or one or more claims thereof) shown or described herein.

In the event of inconsistent usages between this document and any documents so incorporated by reference, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the claims, the terms "including" and "comprising" are open-ended, that is, a system, device, article, composition, formulation, or process that includes elements in addition to those listed after such a term in a claim are still deemed to fall within the scope of that claim. Moreover, in the claims, the terms "first," "second," and "third," etc. are used merely as labels, and are not intended to impose numerical requirements on their objects.

Method examples described herein may be machine or computer-implemented at least in part. Some examples may include a computer-readable medium or machine-readable medium encoded with instructions operable to configure an electronic device to perform methods as described in the above examples. An implementation of such methods may include code, such as microcode, assembly language code, a higher-level language code, or the like. Such code may include computer readable instructions for performing various methods. The code may form portions of computer program products. Further, in an example, the code may be tangibly stored on one or more volatile, non-transitory, or non-volatile tangible computer-readable media, such as during execution or at other times. Examples of these tangible computer-readable media may include, but are not limited to, hard disks, removable magnetic disks, removable optical disks (e.g., compact discs and digital video discs), magnetic cassettes, memory cards or sticks, random access memories (RAMs), read only memories (ROMs), and the like.

The above description is intended to be illustrative, and not restrictive. For example, the above-described examples (or one or more claims thereof) may be used in combination with each other. Other embodiments may be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment.

## Claims

1. A method for modeling a loop transfer function of a feedback system, comprising:
receiving a transient signal representative of the feedback system's response;
processing the transient signal using an encoder to generate a latent space representation, wherein the encoder integrates physical principles by extracting features from the transient signal that represent dynamic behavior of the feedback system, ensuring that the latent space representation aligns with the physical behavior of the feedback system;
mapping the latent space representation to a loop transfer function using a physics-informed decoder, wherein the decoder maps the latent space representation to poles, zeros, and gain of the loop transfer function, wherein the mapping incorporates physical principles to ensure the outputs are physically meaningful and interpretable; and
generating predicted frequency response characteristics of the feedback system based on the poles, zeros, and gain of the loop transfer function.

2. The method of claim 1, wherein extracting features from the transient signal comprises extracting at least one of transient characteristics and feedback system stability factors, wherein the transient characteristics include at least one of overshoot, settling time, rise time, oscillations, and damping behavior, and wherein the feedback system stability factors include at least one of pole location, gain margin, phase margin, frequency response, and feedback loop dynamics.

3. The method of claim 1 or 2, wherein the decoder deterministically maps the latent space representation to poles, zeros, and gain such that for a given latent space representation the decoder consistently produces the same outputs in a predictable and repeatable manner without relying on randomness or probabilistic methods.

4. The method of any one of claims 1 to 3, wherein the decoder applies regularization techniques to constrain the location and distribution of poles and zeros within predefined physical boundaries, wherein the predefined physical boundaries are defined by the feedback system's transfer function constraints, to ensure the outputs are interpretable and consistent with the feedback system's behavior.

5. The method of any one of claims 1 to 4, wherein the decoder separates the latent space representation into distinct components corresponding to poles, zeros, and gain, and wherein the mathematical transformations applied by the decoder include domain-specific operations that preserve causality, stability, and frequency-domain characteristics by ensuring the poles and zeros are located within regions defined by the feedback system's transfer function constraints.

6. The method of any one of claims 1 to 5, further comprising minimizing error between predicted frequency responses and actual measurements using a loss function tailored to the frequency domain, wherein the loss function compares predicted frequency responses to actual measurements and aligns the training process with physical principles to improve training stability and robustness against noise and system variations.

7. The method of claim 6, wherein the predicted frequency responses compared by the loss function include Bode plots comprising magnitude and phase information, and wherein the actual measurements include physically measured gain and phase data.

8. The method of any one of claims 1 to 7, further comprising generating graphical representations of the predicted frequency response characteristics, including Bode plots comprising magnitude plots and phase plots, and pole-zero plots showing the location of poles and zeros of the loop transfer function, to provide diagnostic tools for assessing feedback system stability and causality.

9. The method of any one of claims 1 to 8, wherein generating predicted frequency response characteristics comprises generating observable data comprising gain and phase of the frequency response, and non-observable data comprising poles and zeros of the loop transfer function, wherein the non-observable data provides physical insights into the feedback loop response.

10. The method of any one of claims 1 to 9, wherein the feedback system is a discrete-time system operating in the Z domain, wherein the decoder maps the latent space representation to poles, zeros, and gain in accordance with physical principles of discrete-time linear time-invariant systems, and wherein the method is applicable to at least one of digitally controlled power converters, programmable logic controllers, digital signal processors, and robotics control systems.

11. A physics-informed neural network for identifying a feedback loop response of a device, comprising:
an encoder configured to process a transient signal and generate a latent space representation by extracting features from the transient signal that represent dynamic behavior of the feedback system, ensuring that the latent space representation aligns with the physical behavior of the feedback system;
a physics-informed decoder configured to map the latent space representation to poles, zeros, and gain of a loop transfer function, wherein the mapping incorporates physical principles to ensure the outputs are physically meaningful and interpretable; and
an output head configured to generate predicted frequency response characteristics based on the poles, zeros, and gain of the loop transfer function, wherein the predicted frequency response characteristics describe the feedback loop response.

12. The physics-informed neural network of claim 11, wherein the encoder is further configured to extract at least one of transient characteristics and device stability factors from the transient signal, wherein the transient characteristics include at least one of overshoot, settling time, rise time, oscillations, and damping behavior, and wherein the device stability factors include at least one of pole location, gain margin, phase margin, frequency response, and feedback loop dynamics.

13. The physics-informed neural network of claim 11 or 12, wherein the decoder is further configured to deterministically map the latent space representation to poles, zeros, and gain such that for a given latent space representation the decoder consistently produces the same outputs in a predictable and repeatable manner, and wherein the decoder applies domain-specific mathematical transformations that preserve causality, stability, and frequency-domain characteristics by ensuring poles and zeros are located within regions defined by the feedback system's transfer function constraints.

14. The physics-informed neural network of any one of claims 11 to 13, wherein the decoder applies regularization techniques to constrain the location and distribution of poles and zeros within predefined physical boundaries defined by the feedback system's transfer function constraints, to ensure physically meaningful and interpretable outputs, and wherein the output head generates graphical representations of the predicted frequency response characteristics including Bode plots and pole-zero plots to provide diagnostic tools for assessing device stability and causality.

15. The physics-informed neural network of any one of claims 11 to 14, wherein the physics-informed neural network is configured to process at least one of continuous-time systems in the Laplace domain and discrete-time systems in the Z domain, wherein for discrete-time systems the decoder maps the latent space representation to poles, zeros, and gain in accordance with physical principles of discrete-time linear time-invariant systems applicable to at least one of digitally controlled power converters, programmable logic controllers, digital signal processors, and robotics control systems, and wherein the physics-informed neural network is trained using a loss function tailored to the frequency domain that compares predicted frequency responses to actual measurements of gain and phase to minimize error and improve training stability and robustness against noise and system variations.
